# EUROPÄISCHE PATENTANMELDUNG

(11) **EP 3 836 161 A1**
(43) Veröffentlichungstag der Anmeldung: **16.06.2021**
(21) Anmeldenummer: 20000435.6
(22) Anmeldetag: 03.12.2020
(51) Int. Cl.: G21C 3/14, G21C 3/06, G21C 3/12, G21C 3/38

(54) **BRENNSTABANBAUELEMENT, BRENNELEMENT UND KERNBRENNSTOFFANORDNUNG**

(30) Priorität: 10.12.2019 DE 102019008538
(71) Anmelder: Westinghouse Electric Germany GmbH, 68167 Mannheim (DE)
(72) Erfinder: Weintrager, Udo, 68167 Mannheim (DE)
(74) Vertreter: Eickmeyer, Dietmar

(57) **Zusammenfassung**

Die Erfindung betrifft ein Brennstabanbauelement (30, 40) für einen Brennstab (10) eines gasgekühlten Kernreaktors, welches dadurch gekennzeichnet, dass eine Verbindungsvorrichtung mit einer Schutzvorrichtung verbunden ist. Zudem ist die Schutzvorrichtung längserstreckt und eine Länge der Schutzvorrichtung auf die Länge eines radial zu umschließenden Brennstabes (10) angepasst. Mit der Schutzvorrichtung ist ein Brennstab (10) in seiner Längserstreckung in radialer Richtung bedarfsweise zumindest teilweise umschlossen. Schließlich weist die Verbindungsvorrichtung wenigstens ein Verbindungselement auf, das so auf einen Durchmesser eines zu umschließenden Brennstabes (10) angepasst ist, dass das wenigstens ein Verbindungselement bedarfsweise mit dem Brennstab (10) kraftschlüssig verbindbar ist. Die Erfindung betrifft zudem einer Brennelement und eine Kernbrennstoffanordnung, die ein Brennstabanbauelement aufweisen.

## Beschreibung

Die Erfindung betrifft ein Brennstabschutzelement für einen Brennstab eines gasgekühlten Kernreaktors sowie ein Brennelement und eine Kernbrennstoffanordnung, die ein Brennstabanbauelement aufweisen.

Es ist allgemein bekannt, dass es verschiedene Typen von nuklearen Kernkraftanlagen gibt. Bei gasgekühlten Kernreaktoren von einem fortschrittlichen Typ, kurz AGR (Abkürzung für die englische Bezeichnung "Advanced Gas-cooled Reactor) werden beispielsweise Brennstäbe in zylinderförmige Bohrungen in Graphitblöcke eingebracht, so dass zwischen dem Graphit und den Brennstäben ein Ringspalt entsteht. Durch den Ringspalt strömt dann ein Gas, häufig Kohlendioxid, als Kühlmittel oft von oben nach unten, um eine Kühlung der Brennstäbe zu gewährleisten. Das die Brennstäbe umgebende Graphit dient zudem als Moderator für die freien Neutronen bei der Kernspaltung.

Durch chemische und physikalische Einflüsse beim Betrieb eines solchen Kernreaktors wird der Material der Graphitblöcke, nämlich das Graphit beeinflusst. So kann es vorkommen, dass der Graphit stellenweise eine räumliche Expansion oder Schrumpfung erfährt und derart Spannungen im Graphitblock generiert. Diese räumliche Expansion bzw. Schrumpfung geschieht an unvorhersehbaren Stellen. Die in den Graphit eingebrachten Spannungen können jedoch zu verschlechterten Materialeigenschaften und sogar zur Schädigung des Graphits, beispielsweise durch Rissbildung im Graphit oder durch Abplatzen von Graphitteilen vom Graphitblock, führen.

Nachteilig sind solche Schädigungen insbesondere dann, wenn Abplatzungen, also Graphitteile unterschiedlicher Größe im Bereich des Ringspalts vorkommen und so in diesen hineinfallen können und sich in diesem sammeln. Das könnte einerseits zu einer Verschlechterung der Kühlung des Brennelements führen oder andererseits beim Herausziehen des Brennelements aus der Bohrung zu einem Verkeilen oder einer Blockierung des Brennelements im Graphitblock führen.

Ausgehend von diesem Stand der Technik ist es Aufgabe der Erfindung, ein Brennstabanbauelement, ein Brennelement und eine Kernbrennstoffanordnung bereitzustellen, mit dem bzw. mit der ein Blockieren eines Brennelements beim Herausziehen aus einem Graphitblock vermieden oder die Gefahr des Blockierens zumindest verringert ist.

Die Aufgabe wird gelöst durch ein Brennstabanbauelement für einen Brennstab eines gasgekühlten Kernreaktors der eingangs genannten Art. Dieses ist dadurch gekennzeichnet, dass eine Verbindungsvorrichtung mit einer Schutzvorrichtung verbunden ist, dass die Schutzvorrichtung längserstreckt ist, dass eine Länge der Schutzvorrichtung auf die Länge eines radial zu umschließenden Brennstabes angepasst ist, dass mit der Schutzvorrichtung ein Brennstab in seiner Längserstreckung in radialer Richtung bedarfsweise zumindest teilweise umschlossen ist, dass die Verbindungsvorrichtung wenigstens ein Verbindungselement aufweist, welches insbesondere so auf einen Bereich einer Mantelfläche des zu umschließenden Brennstabes angepasst ist, dass das wenigstens eine Verbindungselement bedarfsweise mit wenigstens einer Verbindungsfläche insbesondere an dem Bereich mit dem Brennstab kraftschlüssig verbindbar ist.

Die Grundidee der Erfindung besteht darin, dass mit dem Brennstabanbauelement ein Brennstab radial von einer Schutzvorrichtung umgeben ist. Durch die Schutzvorrichtung ist ein Ringraum zwischen Brennstab und Graphitkörper davor geschützt von sich lösenden Teilen, zum Beispiel abgefallenen oder sich gelösten Graphitteilen gefüllt und der Brennstab ist davor geschützt beim Herausziehen aus der Ausnehmung im Graphit blockiert zu werden. Die Schutzvorrichtung des Brennstabanbauelements ist nämlich so ausgestaltet, dass Graphitteile ab einer bestimmten Größe des das Brennstabanbauelement umgebenen Moderators nicht mit dem Brennstab in Berührung kommen kann. Damit ist sichergestellt, dass ein Blockieren des Brennstabes beim Herausziehen aus seiner Bohrung im Graphit des Kernreaktors vermieden ist.

Eine bevorzugte Ausgestaltung des Brennstabanbauelements sieht vor, dass die Schutzvorrichtung eine Anzahl von Stabelementen aufweist, die so mit der Verbindungsvorrichtung verbunden ist, dass die Stabelemente mit ihren in radialer Richtung nach außen weisenden Seiten auf eine gedachte umhüllende Zylinderform angepasst sind. Diese Ausgestaltung sieht also eine Art zylindrischen Käfig vor, der an seinen Stirnseiten jeweils offen ist. Auf diese Weise ist besonders vorteilhaft eine unbehinderte Kühlung des Brennstabes gewährleistet. Auch eine Strömung des Kühlgases zwischen dem Brennstab und der Wandlung der Bohrung im Graphit ist nicht oder nur in minimaler Weise beeinflusst.

Die Stabelemente sind bevorzugt so ausgerichtet, dass eine Richtung einer Längserstreckung der Stabelemente parallel zu einem gedachten verbundenen Brennstab angeordnet ist. Auf diese Weise ist eine Beeinflussung der Schutzvorrichtung auf die Kühlströmung des Kühlgases weiter verringert.

Eine vorteilhafte Ausgestaltung der Stabelemente sieht zudem vor, dass ein gedachter Querschnitt senkrecht zu einer Richtung der Längserstreckung der Stabelemente eine quadratische, eine rechteckige oder eine L-förmige Form aufweist. Mit dieser Art der Ausgestaltung der Stabelemente ist eine besonders stabile Form der Stabelemente erreicht, die sich zudem durch eine besonders geringe Beeinflussung der Kühlströmung auszeichnet.

Eine weitere alternative Ausgestaltung des Brennstabanbauelements ist dadurch gekennzeichnet, dass die Schutzvorrichtung als wenigstens ein rohrförmiges, gewelltes oder gefaltetes Blechelement ausgestaltet ist, das so mit der Verbindungsvorrichtung verbunden ist, dass das wenigstens eine Blechelement mit seinen in radialer Richtung nach außen weisenden Scheitellinien von Blechwellen oder Blechfalten auf eine gedachte umhüllende Zylinderform angepasst sind. Die Ausgestaltung der Schutzvorrichtung als ein oder mehrere Blechelemente beziehungsweise als geformtes oder gefaltetes Blechelement hat den Vorteil, dass mit vergleichsweise dünnen Bauteilen gearbeitet wird. Auf diese Weise ist zum einen die Fertigung vereinfacht, zum anderen wird die Kühlströmung durch die dünnen Bleche nur in besonders geringe Maß beeinflusst. Die gedachte umhüllende Zylinderform ist dabei nicht auf einen kreiszylindrischen Querschnitt beschränkt. Es ist auch innerhalb des Erfindungsgedankens, wenn die umhüllende Zylinderform einen anderen Querschnitt aufweist, beispielsweise elliptisch, quadratisch, rechteckig oder oval.

Sind die Blechelemente zudem noch perforiert, ist die Kühlwirkung des Kühlstroms verbessert.

Eine vorteilhafte Variante des Brennstabanbauelements ist dadurch erreicht, dass die Schutzvorrichtung mit wenigstens einem Abstandshalter verbunden ist oder wenigstens einen Abstandshalter aufweist, dass der wenigstens eine Abstandshalter auf den Querschnitt des Brennstabes mit einer Spielpassung angepasst ist. Neben der Verbindungsvorrichtung können also auch Abstandshalter vorgesehen sein, welche die mechanische Stabilität der Schutzvorrichtung verbessern und zudem die Schutzvorrichtung in einem vorbestimmten Abstand zum Brennstab positionieren. Die Anpassung des Abstandshalters auf den Querschnitt des Brennstabes mittels einer Spielpassung hat den Vorteil einer besonders einfachen Montage des Abstandshalters und des Brennstabanbauelements insgesamt. Dabei ist es egal, ob der Abstandshalter unmittelbar mit der Schutzvorrichtung verbunden ist oder nur mittelbar, d.h. beispielsweise indirekt über die Schutzvorrichtung mit der Verbindungsvorrichtung verbunden ist.

Das Verbindungselement ist so ausgestaltet, dass es mit dem Brennstab bedarfsweise kraftschlüssig verbindbar ist, beispielsweise mit Schrauben, die einen Spannring um den Brennstab anziehen. Die kraftschlüssige Verbindung ist in vorteilhafter Weise dadurch erreicht, dass das wenigstens eine Verbindungselement eine Schelle mit Federelement oder Klemmelement ist, mit welchem eine Verbindungskraft vorgegeben oder mit welchem eine gewünschte Verbindungskraft einstellbar ist. Die Schelle kann beispielsweise ein- oder zweiteilig sein und mit Schrauben gegen den Bereich der Mantelfläche verspannt werden. In diesem Fall dienen die Schrauben als Federelement mit dem die Spannkraft einstellbar ist, insbesondere über die Vorgabe eines Anzugsmoments der Schrauben. Eine weitere Ausgestaltung des Verbindungselements ist die Ausstattung mit einem Klemmelement, beispielsweise nach dem technischen Prinzip eines Klemmrings mit Exzenterhebel, insbesondere nach Bauart eines Wellen-Klemmrings der Firma "Ruland". Damit ist eine schnelle Montage an den Brennstab beziehungsweise Demontage des Brennstabanbauelements ermöglicht, wobei die Haltekraft der kraftschlüssigen Verbindung wiederholbar durch die Federkraft vordefiniert ist.

In vorteilhafter Weise ist das Brennstabanbauelement auch dadurch gekennzeichnet, dass die Verbindungsvorrichtung an ihrer radial nach innen weisenden Seite ein Dehnungselement, ein Federband oder ein gewelltes Federband aufweist. Wenn die Kontaktflächen der Verbindungsvorrichtung mit dem Brennstab derart ausgestaltet sind, ist eine Kompensation einer Temperaturdehnung des Brennstabes bei einem Temperaturanstieg besonders einfach erreicht.

Eine besonders bevorzugte Ausgestaltung des Brennstabanbauelements sieht vor, dass die Verbindungsvorrichtung wenigstens ein Gelenkelement aufweist, dass die Verbindungsvorrichtung durch das wenigstens eine Gelenkelement in zwei Verbindungsteilvorrichtungen geteilt ist, dass die Verbindungsteilvorrichtungen um eine gedachte Achse des wenigstens einen Gelenkelements verschwenkbar sind, dass die gedachte Achse parallel zu einem gedachten verbundenen Brennstab angeordnet ist, dass die Verbindungsvorrichtung wenigstens ein Verriegelungselement aufweist, welches die Verbindungsteilvorrichtungen bedarfswiese so miteinander verbindet, dass ein Verschwenken der Verbindungsteilvorrichtungen um die gedachte Achse verhindert ist. Mit einer derartigen Ausgestaltung muss der Brennstab nicht mehr von einer Stirnseite in das Brennstabanbauelement eingeschoben werden. Vielmehr ist es nunmehr auch ermöglicht das Brennstabanbauelement aufzuklappen, es also in einen Zustand "geöffnet" zu verschwenken. Dann kann das Brennstabanbauelement aus einer radialen Richtung an den Brennstab verbracht werden und anschließend das Brennstabanbauelement wieder zu verschwenken und zwar in den Zustand "geschlossen", so dass der Brennstab radial vollständig umschlossen ist. Die Verriegelungselemente verhindert sodann ein ungewolltes weiteres Verschwenken der Verbindungsteilvorrichtungen. Das Anbringen bzw. kraftschlüssige Verbinden des Brennstabanbauelements mit dem Brennstab ist hierdurch vereinfacht.

Die Verriegelungselemente sind vorteilhaft als Schrauben oder Nieten oder mit einem elastischen Verschlusselement ausgestaltet. Auf diese Weise ist eine besonders einfache und sichere Verriegelung gewährleistet.

Eine weitere vorteilhafte Ausgestaltung des Brennstabanbauelements ist erreicht, wenn die Schutzvorrichtung in ihrer Längsrichtung gesehen in wenigstens zwei Teilschutzvorrichtungen geteilt ist, und dass die Teilschutzvorrichtungen an ihren zueinander weisenden Stirnseiten so ausgestaltet sind, dass die Schutzteilvorrichtungen an diesen Stirnseiten in Längsrichtung einen Überlappungsbereich aufweisen. Bei dieser Ausgestaltung ist die Schutzvorrichtung also in Längsrichtung betrachtet in wenigstens zwei Teilschutzvorrichtungen unterteilt. Diese Teilschutzvorrichtungen können dann unabhängig voneinander an den Brennstab montiert werden, was die Montage selbst vereinfacht. Zum andern ist durch die Überlappung der Teilschutzvorrichtungen an ihren zueinander weisenden Stirnseiten sichergestellt, dass keine Lücke zwischen den Teilschutzvorrichtungen entsteht, in die gegebenenfalls störende gelöste Graphitteile an den Brennstab gelangen könnten. Eine Blockierung des Brennstabes ist auch hierdurch verhindert.

Die Aufgabe wird auch gelöst durch ein Brennelement mit einem Brennstab und einem mit dem Brennstab verbundenen Brennstabanbauelement.

Ein Brennelement ist besonders vorteilhaft so ausgestaltet, dass der Brennstab in seiner Längsrichtung in wenigstens zwei Brennstabteilelemente unterteilt ist, dass jedes Brennstabteilelement in seiner Längsrichtung eine Durchgangsausnehmung aufweist, dass ein Ankerelement durch die Durchgangsausnehmungen durchgreift und durch welches Ankerelement die Brennstabteilelemente miteinander verbunden sind. Auf diese Weise ist die Herstellung eines vergleichsweise langen Brennstabes vereinfacht.

Eine weitere vorteilhafte Ausgestaltung des Brennelements ist dadurch gekennzeichnet, dass der Brennstab oder die Brennstabteilelemente oder ein Bereich an den Berührstellen zwischen zwei benachbarten Brennstabteilelementen in radial umlaufender Richtung wenigstens eine Nut aufweisen, dass in der wenigstens einen Nut eine Feder des Verbindungselements eingreift und derart mit dem Brennstab oder einem Brennstabteilelement oder einem Bereich an den Berührstellen zwischen zwei benachbarten Brennstabteilelementen verbunden ist. Auf diese Weise ist eine besonders einfache und zuverlässige Verbindung zwischen dem Brennstabanbauelement und dem Brennstab sichergestellt. Zudem ist die axiale Position des Brennstab Anbauelements am Brennstab besonders einfach und positionsgenau vorgebbar.

Die Aufgabe wird zudem gelöst durch eine Kernbrennstoffanordnung in einem gasgekühlten Kernreaktor, wobei mehrere als Moderator dienende Graphitkörper in geodätischer Richtung gesehen vertikaler übereinander angeordnet sind, wobei die Graphitkörper in vertikaler Richtung jeweils eine weitere Ausnehmung aufweisen, wobei der Brennstab in den weiteren Ausnehmungen angeordnet ist und der Brennstab eine kürzere Länge aufweist als die Summe der Längen der weiteren Ausnehmungen in vertikaler Richtung gesehen, dass der Brennstab auf seiner vertikal nach unteren weisenden Stirnseite auf einem Positionierelement aufsteht sowie mit seinem vertikal nach oben weisenden Stirnseite mit einem Positionierstopfen gehalten ist, so dass zwischen dem Brennstab und der nach radial innen weisenden Flächen der Graphitkörper ein Ringspalt vorhanden ist. Die Kernbrennstoffanordnung ist dadurch gekennzeichnet, dass die radiale äußere Gestalt der Schutzvorrichtung eines Brennelementes mit einer Spielpassung auf die radial nach innen weisende Flächen der weiteren Ausnehmungen angepasst ist. Eine besonders vorteilhafte Ausgestaltung der weiteren Ausnehmungen ist eine Bohrung mit einem kreisförmigen Querschnitt. Der Erfindungsgedanken ist jedoch nicht auf dieser Ausgestaltung beschränkt. Es ist ohne weiteres denkbar, dass die weitere Ausnehmung im Querschnitt oval quadratisch oder eine andere Form annimmt. In allen Fällen ist jedoch eine Spielpassung des Brennelements, also insbesondere eine entsprechende Ausgestaltung des Brennstabanbauelements, auf die weiteren Ausnehmungen vorgesehen. Auf diese Weise ist ein besonders einfaches Einbringen des Brennelements in die weiteren Ausnehmungen beziehungsweise ein besonders einfaches Herausziehen des Brennelements aus den weiteren Ausnehmungen ermöglicht.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine beispielhafte Einbausituation für einen Brennstab eines gasgekühlten Kernreaktors,
- Fig. 2: die Einbausituation des Brennstabes mit einem ersten Brennstabanbauelement,
- Fig. 3: eine Ansicht auf das erste Brennstabanbauelement,
- Fig. 4: eine Ansicht auf ein zweites Brennstabanbauelement,
- Fig. 5: eine Ansicht auf einen teilweise freigeschnittenen Graphitblock mit eingesetzten Brennstabanbauelementen sowie
- Fig. 6: eine Vergrößerung eines Ausschnittes der Fig. 5.

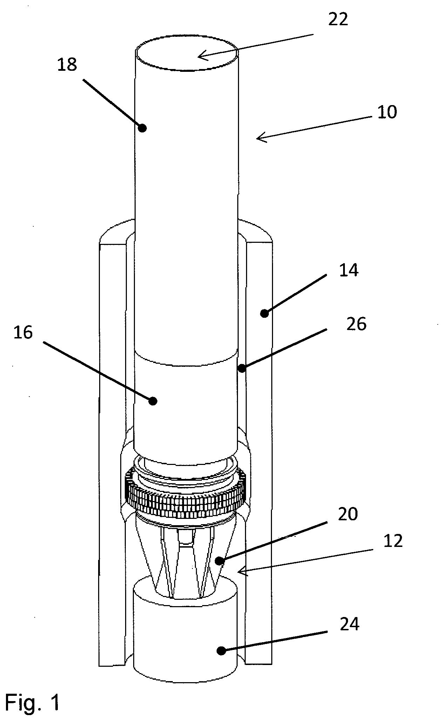

Fig. 1 zeigt eine beispielhafte Einbausituation für einen Brennstab 10 eines gasgekühlten Kernreaktors des Typs AGR (Abkürzung für die englische Bezeichnung advanced gas-cooled reactor), der in einer Bohrung 12 eines ersten Graphitkörpers 14 gemäß dem Stand der Technik angeordnet ist. Vom Brennstab 10 ist lediglich der geodätisch unteren Teil mit einem ersten 16 und einem zweiten Brennstabteilelement 18 gezeigt, welche Brennstabteilelemente 16, 18 durch einen zentralen Zuganker 20 als Ankerelement durch Durchgangsausnehmungen 22 in den Brennstabteilelement 16, 18 durchgeführt ist und diese gegeneinander in axialer Richtung zusammenspannen und so zu einem fest verbundenen Brennstab 10 verbinden. Der Brennstab 10 steht mit seinem Zuganker 20 auf einem Positionierelement 24 auf, mit dem der Brennstab 10 genau mittig in der Bohrung 12 positioniert ist, so dass zwischen dem Graphitkörper 14 und dem Brennstab 10 beziehungsweise den Brennstabteilelementen 16, 18 ein Ringspalt 26 vorhanden ist. Dieser Ringspalt 26 wird in einer typischen Kernanordnung eines AGR Kernreaktors von oben nach unten mit einem Kühlgas, vorzugsweise Kohlendioxid (CO2) durchströmt und derart der Brennstab 10 gekühlt. Der Kernreaktor ist zudem mit einer Vielzahl von Graphitblöcken aufgebaut, übereinander und nebeneinander gestapelt, die als Moderator für die freien Neutronen des Kernreaktors dienen, von welchen Graphitkörpern jedoch nur ein unterer Teil des ersten Graphitkörpers 14 gezeigt ist.

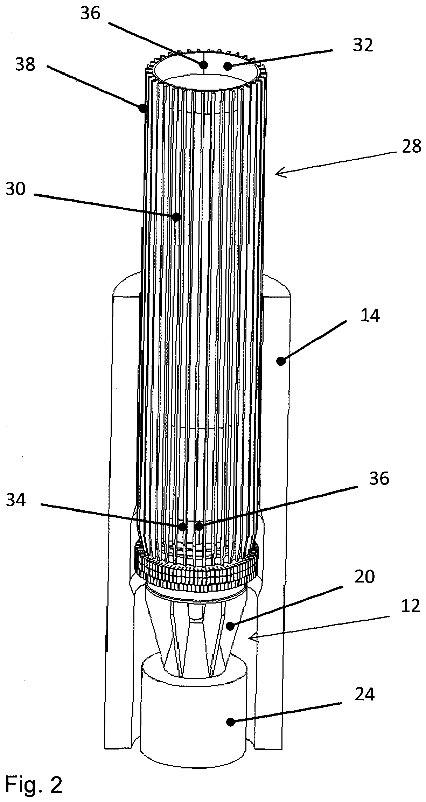

Fig. 2 zeigt die beispielhafte Einbausituation für den Brennstab 10 gemäß der Fig. 1, weshalb für die gleichen Bauteile wie in der Fig. 1 auch dieselben Bezugszeichen verwendet sind. Zudem ist in der Fig. 2 ein erstes Brennstabanbauelement 30 gezeigt, dass mit einer Verbindungsvorrichtung, die aus einer ersten 32 und einer zweiten Verbindungsteilvorrichtung 34 gebildet ist, mit den Brennstabteilelementen 16, 18 kraftschlüssig verbunden ist. Ein Brennelement 28 weist also den Brennstab 10 und das erste Brennstabanbauelement 30 auf. Im gezeigten Beispiel ist jede Verbindungsteilvorrichtungen 32, 34 als Ringelement ausgestaltet, dass an jeweils einer radialen Stelle 36 einen Spalt aufweist. Durch diesen Spalt ist es einer Spannvorrichtung, die in der Figur jedoch nicht gezeigt ist, ermöglicht, das Ringelement - und damit die betreffende Verbindungsteilvorrichtungen 32, 34 - mit einer vorgebbaren Kraft gegen das betreffende Brennstabteilelement 16, 18 kraftschlüssig zu verspannen. Dazu ist ein lichter Durchmesser der Ringelemente entsprechend auf einen radial äußeren Durchmesser des Brennstabteilelements 16, 18 angepasst. Die Spannvorrichtung kann beispielsweise durch eine Schraube/Mutter Anordnung ausgestaltet sein. Es sind auch möglich hier eine federbelastete Spannvorrichtung einzusetzen, so dass die Spannkraft durch die Feder der Spannvorrichtung vorgebbar ist.

Das erste Brennstabanbauelement 30 weist zudem eine Vielzahl von Stabelementen 38 auf, wobei jedes Stabelement 38 sowohl mit dem ersten 32 als auch mit dem zweiten Verbindungsteilelement 34 fest verbunden sind, beispielsweise durch eine Verschweißung. Die Stabelemente 38 sind im gezeigten Ausführungsbeispiel gerade, längserstreckte, stabähnliche Bauelemente, die im Wesentlichen einen - senkrecht zu ihrer Längserstreckung betrachtet - rechteckigen Querschnitt aufweisen. Die Querschnittsform ist nur beispielhaft gewählt und kann auch ohne weiteres L-förmig, quadratisch, kreisförmig, elliptisch sein oder eine andere Querschnittsform annehmen. Die Anordnung der Stabelemente 38 ist so gewählt, dass auf der radial äußeren Seite der Verbindungsteilelemente 32, 34 angeordnet sind und zudem alle die gleichen Abmessungen beziehungsweise Gestalt aufweisen. Im Ergebnis ist das erste Brennstabanbauelement in etwa hohlzylinderförmig, wobei der radial innere Durchmesser durch den radialen Innendurchmesser der Verbindungsteilelemente 32, 34 vorgegeben ist und der radial äußere Durchmesser durch den Außendurchmesser der Stabelemente 38. Zudem sind die Stabelemente 38 so angeordnet, dass eine Richtung ihrer Längserstreckung parallel zu einer gedachten Mittellinie der Bohrung 12 im Graphitkörper 14 gelegen ist. Der Außendurchmesser der Stabelemente 38 ist zudem mit einer Spielpassung auf den Durchmesser der Bohrung 12 angepasst. Mit einer derartigen Ausgestaltung ist erreicht, dass der Ringspalt 26 fast vollständig mit dem ersten Brennstabanbauelement 30 erfüllt ist. Gleichzeitig sind Abstände zwischen radial benachbarten Stabelementen 38 so gewählt, dass die Kühlströmung des Kühlgases in Längsrichtung der Bohrung12 im Ringspalt 26 nicht oder nur in geringem, jedenfalls in einem zulässigen Maße beeinflusst ist.

Die in der Figur jeweils nach unten weisenden stirnseitigen Enden der Stabelemente 38 sind jeweils spitz zulaufend beziehungsweise angeschrägt, wobei die spitze Form durch eine Anschrägung beziehungsweise eine Fase erreicht ist. Die Spitzen sind alle auf einem gedachten ringförmigen Bereich gelegen, der in etwa dem lichten Durchmesser der durch die Stabelemente gebildeten Hohlzylinderkörper entspricht. Die einseitig spitz zulaufende Form der Stabelemente 38 erleichtert ein Einführen des Brennelements 28 in die Bohrung 12. Insgesamt ist durch das erste Brennstabanbauelement 30 eine Art Käfig um den Brennstab 12 herum entstanden, der im Ringspalt 26 angeordnet ist und derart verhindert, dass sich lösende oder gelöste Teile des Graphitkörpers 14 in den Ringspalt 26 fallen können und diesen damit blockieren. Eine entsprechende Verschlechterung der Kühlung im Ringspalt 26 ist verhindert. Zudem ist vermieden, dass sich Losteile des Graphitkörpers 14 derart sammeln, dass sie den Brennstab 10 beispielsweise wenn dieser aus der Bohrung 12 herausgezogen werden soll, blockieren.

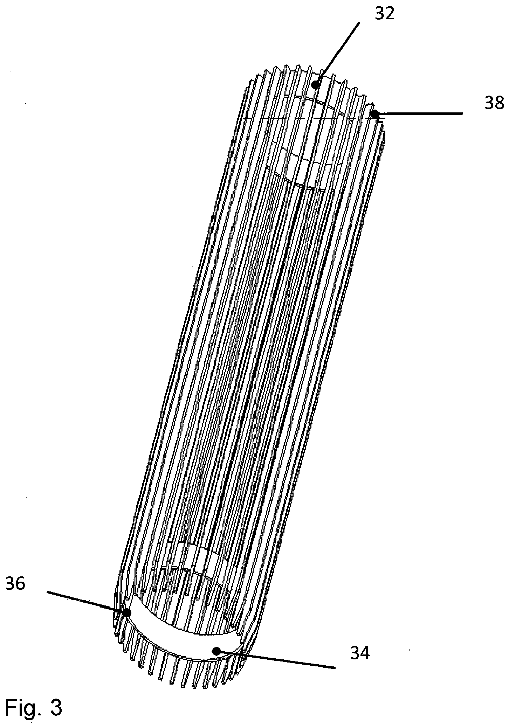

Die Fig. 3 zeigt eine Ansicht auf das erste Brennstabanbauelements 30 als separates Bauteil zwecks verbesserter Darstellung desselben, weshalb in dieser Figur die bereits eingeführten Bezugszeichen verwendet werden.

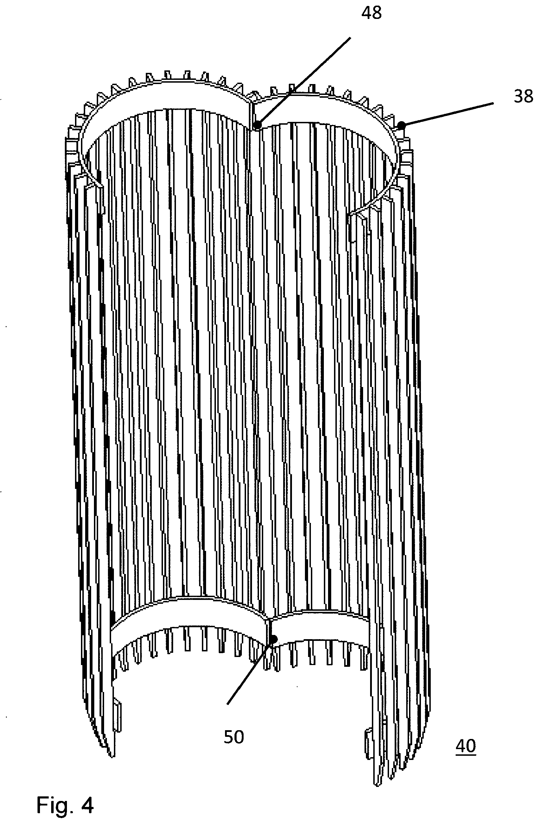

Die Fig. 4 zeigt ein zweites Brennstabanbauelements 40, das wiederum Stabelemente 38 aufweist, die mit einem dritten und einem vierten Verbindungsteilelement 44 verbunden sind. Im gezeigten Beispiel weist das dritte Verbindungselement ein erstes Gelenkelement 48 und das vierte Verbindungselement 44 ein zweites Gelenkelement 50 auf, die so zueinander gelegen sind, dass das zweite Brennstabanbauelement 40 in etwa in zwei Hälften unterteilt ist, die durch die Gelenkselemente 48, 50 miteinander verbunden sind und zugleich gegeneinander verschwenkbar sind. Das hat den Vorteil, dass die beiden Hälften, beispielsweise wie sie in der Figur dargestellt sind, so verschwenkt sind, dass diese aus einer radialen Richtung vom Brennstab aus gesehen an diesen verbracht werden können. Anschließend werden die Hälften wiederum so verschwenkt, dass die Hälften wieder die in etwa holzylindrische Gestalt des ersten Brennstabanbauelements 30 auch beim zweiten Brennstabanbauelement 40 erreicht ist. Eine in der Figur nicht dargestellte Verriegelungsvorrichtung sorgt dafür, dass ein ungewolltes Verschwenken der beiden Hälften des zweiten Brennstabanbauelements 40 vermieden ist und zugleich bedarfsweise eine kraftschlüssige Verbindung mit einem Brennstab hergestellt ist.

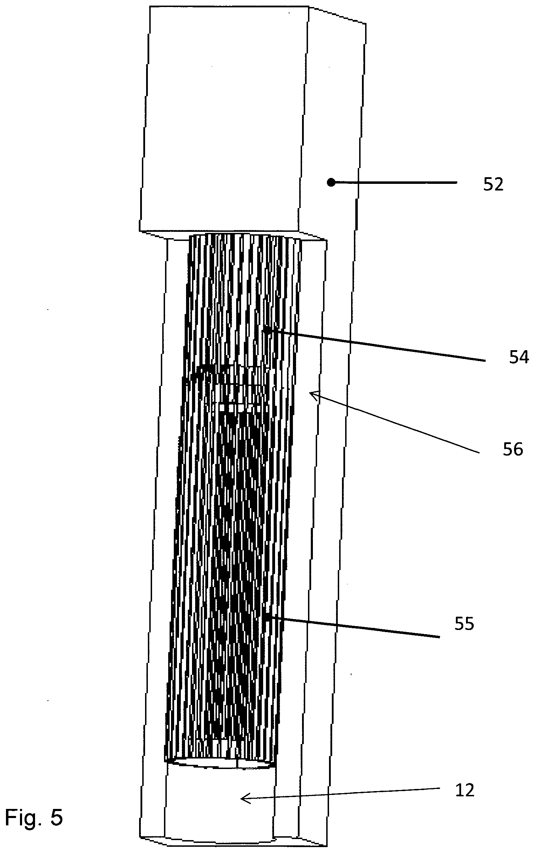

Die Fig. 5 zeigt eine Ansicht auf einen teilweise freigeschnittenen Graphitblock, der wiederum als Moderator in einem gasgekühlten Kernreaktor dient, und zwar mit einem dritten Brennstabanbauelement, das eine erste 54 und eine zweite Teilschutzvorrichtung 55 aufweist, jedoch ohne einen Brennstab. Das gezeigte Beispiel verdeutlicht, dass es auch innerhalb des Erfindungsgedankens ist, dass mehrere Teilschutzvorrichtungen 54, 55 in axialer Richtung der Bohrung 12 hintereinander zu einem Brennstabanbauelement anordenbar sind. Hierbei ist es vorteilhaft, wenn die stirnseitigen Enden der Teilschutzvorrichtungen 54, 55, die einander zugewandt sind, spitz zulaufend, zum Beispiel so wie es in der Figur 3 gezeigt ist. Bei einer entsprechenden Anordnung der beiden Teilschutzvorrichtungen 54, 55 nämlich genau so, dass deren Stabelemente gerade nicht fluchten, ist es ermöglicht, auf besonders einfache Weise einen Überlappungsbereich 56 der beiden Teilschutzvorrichtungen zu realisieren. Es kann auch vorgesehen sein, dass beide stirnseitigen Enden der Stabelemente 38 spitz zu laufen. Solche Stabelemente 38 können dann sowohl als Bauelemente für eine Teilschutzvorrichtung als auch für eine Schutzvorrichtung eingesetzt sein.

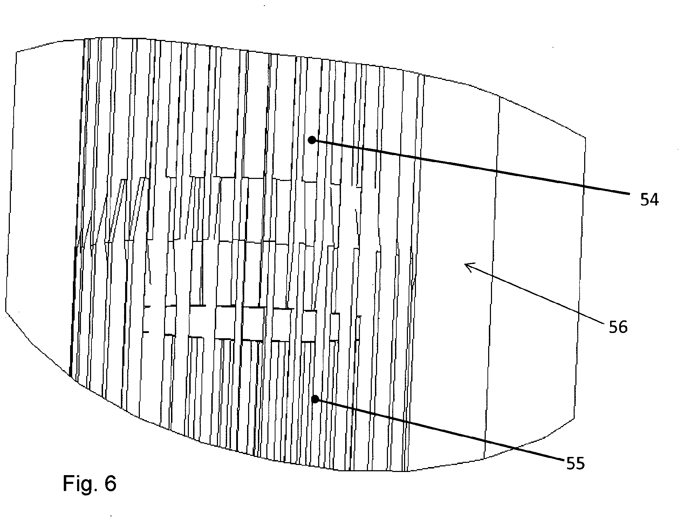

Die Fig. 6 zeigt eine Vergrößerung eines Ausschnittes des Überlappungsbereiches 56 der Fig., nämlich den Bereich an dem die Teilschutzvorrichtungen 54, 55 in axialer Richtung der Bohrung 12 hintereinander zu einem Brennstabanbauelement angeordnet sind.

### Bezugszeichenliste

- 10: Brennstab
- 12: Bohrung
- 14: Graphitkörper
- 16: erstes Brennstabteilelement
- 18: zweites Brennstabteilelement
- 20: Zuganker
- 22: Durchgangsausnehmung(en)
- 24: Positionierelement
- 26: Ringspalt
- 28: Brennelement
- 30: erstes Brennstabanbauelement
- 32: erstes Verbindungsteilelement
- 34: zweites Verbindungsteilelement
- 36: radiale Stelle
- 38: Stabelemente
- 40: zweites Brennstabanbauelement
- 46: Verbindungselement
- 48: erstes Gelenkelement
- 50: zweites Gelenkelement
- 52: Graphitblock
- 54: erste Teilschutzvorrichtung
- 55: zweite Teilschutzvorrichtung

## Patentansprüche

1. Brennstabanbauelement (30, 40) für einen Brennstab (10) eines gasgekühlten Kernreaktors, wobei eine Verbindungsvorrichtung mit einer Schutzvorrichtung verbunden ist, wobei die Schutzvorrichtung längserstreckt ist, wobei eine Länge der Schutzvorrichtung auf die Länge eines radial zu umschließenden Brennstabes (10) angepasst ist, wobei mit der Schutzvorrichtung ein Brennstab (10) in seiner Längserstreckung in radialer Richtung bedarfsweise zumindest teilweise umschlossen ist, wobei die Verbindungsvorrichtung wenigstens ein Verbindungselement aufweist, das so auf einen zu umschließenden Brennstabes (10) angepasst ist, dass das wenigstens eine Verbindungselement bedarfsweise mit dem Brennstab (10) kraftschlüssig verbindbar ist.

2. Brennstabanbauelement (30, 40) nach Anspruch 1, **dadurch gekennzeichnet, dass** die Schutzvorrichtung eine Anzahl von Stabelementen (38) aufweist, die so mit der Verbindungsvorrichtung verbunden ist, dass die Stabelemente (38) mit ihren in radialer Richtung nach außen weisenden Seiten auf eine gedachte umhüllende Zylinderform angepasst sind.

3. Brennstabanbauelement (30, 40) nach Anspruch 2, **dadurch gekennzeichnet, dass** die Stabelemente (38) längserstreckt sind, und dass eine Richtung einer Längserstreckung der Stabelemente (38) parallel zu einem gedachten verbundenen Brennstab (10) angeordnet ist.

4. Brennstabanbauelement (30, 40) nach Anspruch 2 oder 3, **dadurch gekennzeichnet, dass** ein Querschnitt senkrecht zu einer Längserstreckung der Stabelemente (38) eine quadratische, eine rechteckige oder eine L-förmige Form aufweist.

5. Brennstabanbauelement (30, 40) nach Anspruch 1, **dadurch gekennzeichnet, dass** die Schutzvorrichtung als wenigstens ein rohrförmiges, gewelltes oder gefaltetes Blechelement ausgestaltet ist, das so mit der Verbindungsvorrichtung verbunden ist, dass das wenigstens eine Blechelement mit seinen nach in radialer Richtung nach außen weisenden Scheitellinien von Blechwellen oder Blechfalten auf eine gedachte umhüllende Zylinderform angepasst sind

6. Brennstabanbauelement (30, 40) nach Anspruch 5, **dadurch gekennzeichnet, dass** das wenigstens eine Blechelement perforiert ist.

7. Brennstabanbauelement (30, 40) nach einem der vorherigen Ansprüche, **dadurch gekennzeichnet, dass** das wenigstens eine Verbindungselement so auf einen Bereich einer Mantelfläche des zu umschließenden zylinderförmigen Brennstabes (10) angepasst ist, dass das wenigstens eine Verbindungselement bedarfsweise mit wenigstens einer Verbindungsfläche an dem Bereich mit dem Brennstab (10) kraftschlüssig verbunden ist.

8. Brennstabanbauelement (30, 40) nach einem der vorherigen Ansprüche, **dadurch gekennzeichnet, dass** die Schutzvorrichtung mit wenigstens einem Abstandshalter verbunden ist, dass der wenigstens eine Abstandshalter auf den Querschnitt des Brennstabes mit einer Spielpassung angepasst ist.

9. Brennstabanbauelement (30, 40) nach einem der vorherigen Ansprüche, **dadurch gekennzeichnet, dass** das wenigstens eine Verbindungselement eine Schelle mit einem Federelement oder mit einem Klemmelement ist, mit welchem eine Verbindungskraft vorgegeben oder auf eine gewünschte Verbindungskraft einstellbar ist.

10. Brennstabanbauelement (30, 40) nach einem der vorherigen Ansprüche, **dadurch gekennzeichnet, dass** die Verbindungsvorrichtung an ihrer radial nach innen weisenden Seite ein Dehnungselement, ein Federband oder ein gewelltes Federband aufweist.

11. Brennstabanbauelement (30, 40) nach einem der vorherigen Ansprüche, **dadurch gekennzeichnet, dass** die Verbindungsvorrichtung wenigstens ein Gelenkelement (48, 50) aufweist, dass die Verbindungsvorrichtung durch das wenigstens eine Gelenkelement (48, 50) in zwei Verbindungsteilvorrichtungen geteilt ist, dass die Verbindungsteilvorrichtungen um eine gedachte Achse des wenigstens einen Gelenkelements (48, 50) verschwenkbar sind, dass die gedachte Achse parallel zu einem gedachten verbundenen Brennstab (10) angeordnet ist, dass die Verbindungsvorrichtung wenigsten ein Verriegelungselement aufweist, welches die Verbindungsteilvorrichtungen bedarfsweise so miteinander verbinden, dass ein Verschwenken der Verbindungsteilvorrichtungen um die gedachte Achse verhindert ist.

12. Brennstabanbauelement (30, 40) nach Anspruch 11, **dadurch gekennzeichnet, dass** das wenigsten eine Verriegelungselement als Schrauben oder Nieten oder mit einem elastischen Verschlusselement ausgestaltet ist.

13. Brennstabanbauelement (30, 40) nach einem der vorherigen Ansprüche, **dadurch gekennzeichnet, dass** die Schutzvorrichtung in ihrer Längsrichtung gesehen wenigstens zwei Teilschutzvorrichtungen (54, 55) aufweist, und dass die Teilschutzvorrichtungen (54, 55) an ihren zueinander weisenden Stirnseiten so ausgestaltet sind, dass die Schutzteilvorrichtungen an diesen Stirnseiten in Längsrichtung einen axialen Überlappungsbereich aufweisen.

14. Brennelement (28) mit einem Brennstab (10) und einem mit dem Brennstab (10) verbundenen Brennstabanbauelement (30, 40) nach einem der Ansprüche 1 bis 12.

15. Brennelement (28) nach Anspruch 14, **dadurch gekennzeichnet, dass** der Brennstab in seiner Längsrichtung in wenigstens zwei Brennstabteilelemente (16, 18) unterteilt ist, dass jedes Brennstabteilelement (16, 18) in seiner Längsrichtung eine Durchgangsausnehmung aufweist, dass ein Ankerelement durch die Durchgangsausnehmungen durchgreift und durch welches Ankerelement die Brennstabteilelemente (16, 18) miteinander verbunden sind.

16. Brennelement (28) nach Anspruch 14 oder 15, **dadurch gekennzeichnet, dass** der Brennstab (10) oder die Brennstabteilelemente (16, 18) oder ein Bereich an den Berührstellen zwischen zwei benachbarten Brennstabteilelementen in radial umlaufender Richtung wenigstens eine Nut aufweisen, dass in der wenigstens einen Nut eine Feder des Verbindungselements eingreift und derart mit dem Brennstab (10) oder einem Brennstabteilelement (16, 18) oder einem Bereich an den Berührstellen zwischen zwei benachbarten Brennstabteilelementen (16, 18) verbunden ist.

17. Kernbrennstoffanordnung in einem gasgekühlten Kernreaktor, wobei mehrere als Moderator dienende Graphitkörper (14) in geodätischer Richtung gesehen vertikal übereinander angeordnet sind, wobei die Graphitkörper (14) in vertikaler Richtung jeweils eine weitere Ausnehmung aufweisen, wobei der Brennstab (10) in den weiteren Ausnehmungen angeordnet ist und eine kürzere Länge aufweist als die Summe der Längen der weiteren Ausnehmungen in vertikaler Richtung gesehen, dass der Brennstab (10) auf mit seiner vertikal unteren Stirnseite auf einem Positionierelement (24) aufsteht sowie mit seinem vertikal oberen Ende mit einem Positionierstopfen gehalten ist, so dass zwischen dem Brennstab (10) und der nach radial innen weisenden Flächen der Graphitkörper (14) ein Ringspalt (26) vorhanden ist,
wobei die radiale äußere Gestalt der Schutzvorrichtung eines Brennelementes (28) nach einem der Ansprüche 14 bis 16 mit einer Spielpassung auf die radial nach innen weisende Gestalt der weiteren Ausnehmungen angepasst ist.
